# EUROPÄISCHE PATENTSCHRIFT

(11) **EP 1 021 667 B1**
(45) Veröffentlichungstag und Bekanntmachung des Hinweises auf die Patenterteilung: **13.03.2002**
(21) Anmeldenummer: 98961097.7
(22) Anmeldetag: 05.10.1998
(51) Int. Cl.: F16H 61/14

(54) **VERFAHREN ZUR ADAPTION EINER WANDLERÜBERBRÜCKUNGSKUPPLUNG**
METHOD FOR ADAPTING A TORQUE CONVERTER LOCK-UP CLUTCH
PROCEDE D'ADAPTATION D'UN EMBRAYAGE DE PONTAGE DE CONVERTISSEUR

(30) Priorität: 10.10.1997 DE 19744697
(43) Veröffentlichungstag der Anmeldung: 26.07.2000
(73) Patentinhaber: ZF FRIEDRICHSHAFEN Aktiengesellschaft, 88038 Friedrichshafen (DE)
(72) Erfinder: ZIMMERMANN, Bernd, D-89610 Oberdischingen (DE)
(86) Internationale Anmeldenummer: EP9806315
(87) Internationale Veröffentlichungsnummer: WO9919645

(56) Entgegenhaltungen:
- US-A- 4 582 182
- US-A- 4 660 697
- US-A- 4 989 471
- US-A- 5 160 002
- US-A- 5 332 073
- US-A- 5 737 979

## Beschreibung

Die Erfindung betrifft ein Verfahren zur Adaption einer Wandlerüberbrückungskupplung in einem Automatgetriebe, bei dem eine elektronische Getriebesteuerung mit Erkennen der Anforderung einer Zustandsänderung der Wandlerüberbrückungskupplung einen Anlegedruck ausgibt. Aus rückgemeldeten Größen erkennt die elektronische Getriebesteuerung eine Zustandsänderung der Wandlerüberbrückungskupplung während einer Steuer-/Regelphase. Hieraus bestimmt sodann die elektronische Getriebesteuerung einen Adaptionswert für den Anlegedruck.

Bei Wandlerüberbrückungskupplungen tritt in der Praxis das Problem auf, daß deren Anlegeverhalten eindeutig vom mechanischen axialen Spiel der Anordnung, dem sogenannten Lüftspiel, abhängig ist. Unterschiedliches Lüftspiel bewirkt einen unterschiedlichen Schaltkomfort bei Zustandsänderungen der Wandlerüberbrückungskupplung, wie z. B. von offen nach geregelt bzw. von offen nach geschlossen. Die DE-OS 41 11 081 schlägt hierzu als Lösung vor, daß bei einem gesteuerten/geregelten Übergang von offen nach geschlossen der Anlegedruck überprüft wird, indem die Veränderung des Schlupfs innerhalb einer vorgegebenen Zeit gemessen wird. In Abhängigkeit der gemessenen Zeit wird sodann der Anlegedruck entsprechend adaptiert.

Ausgehend vom zuvor beschriebenen Stand der Technik liegt der Erfindung die Aufgabe zugrunde, diesen weiterzuentwickeln.

Die Aufgabe wird erfindungsgemäß gelöst, indem nach Ausgabe des Anlegedrucks zusätzlich eine Anlegephase für die Wandlerüberbrückungskupplung folgt, wobei während der Anlegephase die elektronische Getriebesteuerung innerhalb eines ersten Intervalls eine Druckänderung nach einer Übergangsfunktion ausgibt und das Vorhandensein der Reaktion der Wandlerüberbrückungskupplung prüft. Bei nicht vorhandener Reaktion gibt die elektronische Getriebesteuerung sodann weitere Intervalle aus. Die Anlegephase ist beendet, wenn eine Reaktion der Wandlerüberbrückungskupplung eintritt, wobei die elektronische Getriebesteuerung sodann mit der Steuer-/Regelphase fortfährt. Die Reaktion der Wandlerüberbrückungskupplung kann gemäß Anspruch 2 daran erkannt werden, daß eine Differenzdrehzahl, berechnet aus Pumpen- und Turbinendrehzahl, einen Grenzwert unterschreitet. Die erfindungsgemäße Lösung bietet den Vorteil, daß die Toleranzen, innerhalb deren Grenzen die hergestellten hydrodynamischen Wandler einschließlich der Wandlerüberbrückungskupplung liegen müssen, aufgeweitet werden können. Dies hat in Konsequenz eine entsprechende Kostensenkung zum Vorteil.

In einer Ausgestaltung der Erfindung wird vorgeschlagen, daß der neue Anlegedruck berechnet wird, indem derjenige Druckwert, der bei Auftreten der Reaktion der Wandlerüberbrückungskupplung vorliegt, mit einem Faktor gewichtet wird.

In einer weiteren Ausgestaltung der Erfindung wird vorgeschlagen, daß als zusätzliche Sicherheitsfunktion die während der Anlegephase ausgegebenen Intervalle summiert werden und ein Fehlereintrag in ein Diagnosesystem erfolgt, wenn die Summe einen Grenzwert überschreitet. Als Folgereaktion kann sodann, wie in Anspruch 5 vorgeschlagen, ein Ersatzprogramm aktiviert werden, mittels dem vorgegebene Zustandsänderungen der Wandlerüberbrückungskupplung, z. B. der geregelte Betrieb, nicht mehr zugelassen sind.

In einer weiteren Ausgestaltung wird vorgeschlagen, daß mit Beginn des Verfahrens zur Adaption der Wandlerüberbrückungskupplung eine Zeitstufe gestartet und ein erneutes Verfahren zur Adaption nur dann durchgeführt wird, wenn die Zeitstufe einen Grenzwert überschreitet. Hierdurch wird also berücksichtigt, daß Veränderungen der Wandlerüberbrükkungskupplung, z. B. Reibwertänderung, langsam ablaufen. Somit genügt es, wenn das Adaptionsverfahren in größeren zeitlichen Abständen abgearbeitet wird. Insgesamt ergibt sich somit der Vorteil eines schnelleren Programmablaufs.

In den Zeichnungen ist ein bevorzugtes Ausführungsbeispiel dargestellt.
Es zeigen:
- Fig. 1: ein System-Schaubild;
- Fig. 2: einen Programm-Ablaufplan und
- Fig. 3A und 3B: ein Zeit-Diagramm.

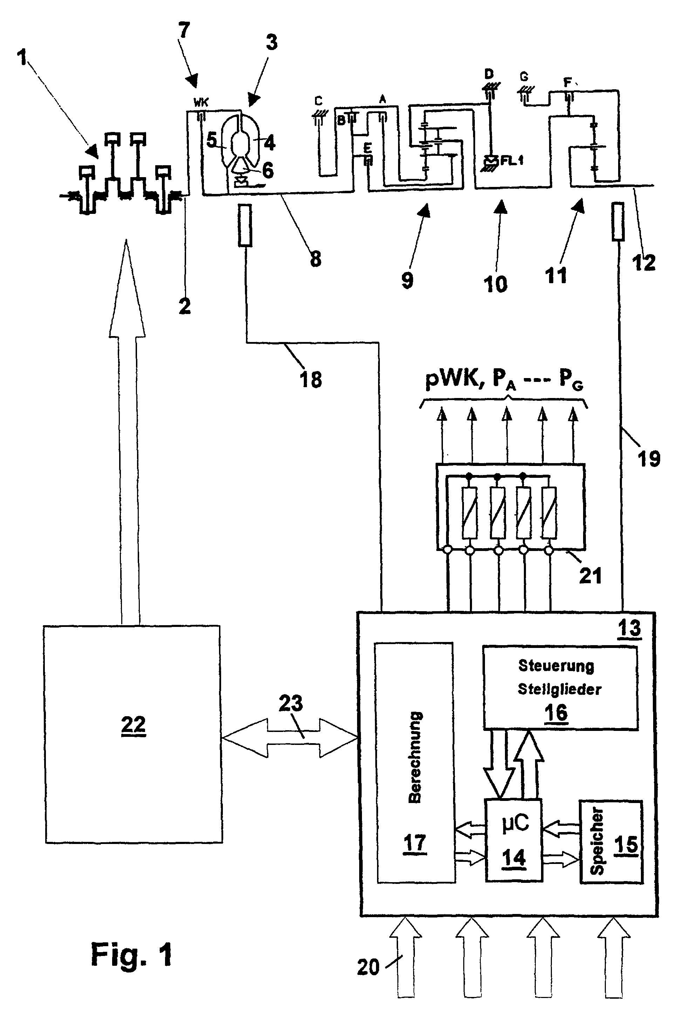

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Dieses ist mit dem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerüberbrükkungskupplung 7 angeordnet. Die Wandlerüberbrückungskupplung 7 und das Turbinenrad 5 führen auf eine Turbinenwelle 8. Bei betätigter Wandlerüberbrückungskupplung 7 hat die Turbinenwelle 8 die gleiche Drehzahl wie die Antriebswelle 2. Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über eine Getriebeausgangswelle 12. Diese führt auf ein nicht dargestelltes Differential, welches über zwei Achshalbwellen die Antriebsräder eines nicht dargestellten Fahrzeuges antreiben. Über eine entsprechende Kupplungs-/Brems-Kombination wird eine Gangstufe festgelegt. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit der Eingangsgrößen 18 bis 20 eine entprechende Fahrstufe aus. Über das hydraulische Steuergerät 21, in dem sich elektro-magnetische Stellglieder befinden, aktiviert sodann die elektronische Getriebesteuerung 13 eine entsprechende Kupplungs-/Brems-Kombination bzw. steuert/regelt den Zustand der Wandlerüberbrückungskupplung. Während der Schaltübergänge bestimmt die elektronische Getriebesteuerung 13 den Druckverlauf der an der Schaltung beteiligten Kupplungen/Bremsen. Von der elektronischen Getriebesteuerung 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme und fahrzeugspezifische Kennwerte, Adaptionswerte als auch Diagnosedaten und Schaltkennfelder. Üblicherweise ist der Speicher 15 als EPROM, EEPROM oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im hydraulischen Steuergerät 21 befindenden Stellglieder. Der elektronischen Getriebesteuerung 13 werden Eingangsgrößen 20 zugeführt. Eingangsgrößen 20 sind z. B. eine den Leistungswunsch des Fahrers repräsentierende Größe, wie etwa die Fahrpedal-/Drosselklappenstellung oder manuelle Schaltungsanforderungen, das Signal des von der Brennkraftmaschine abgegebenen Moments, die Drehzahl bzw. Temperatur der Brennkraftmaschine usw. Die Brennkraftmaschinen-spezifischen Daten werden von einem Motorsteuergerät 22 via Datenleitung 23 bereitstellt. Als weitere Eingangsgrößen erhält die elektronische Getriebesteuerung 13 die Drehzahl der Turbinenwelle 18 und der Getriebeausgangswelle 19.

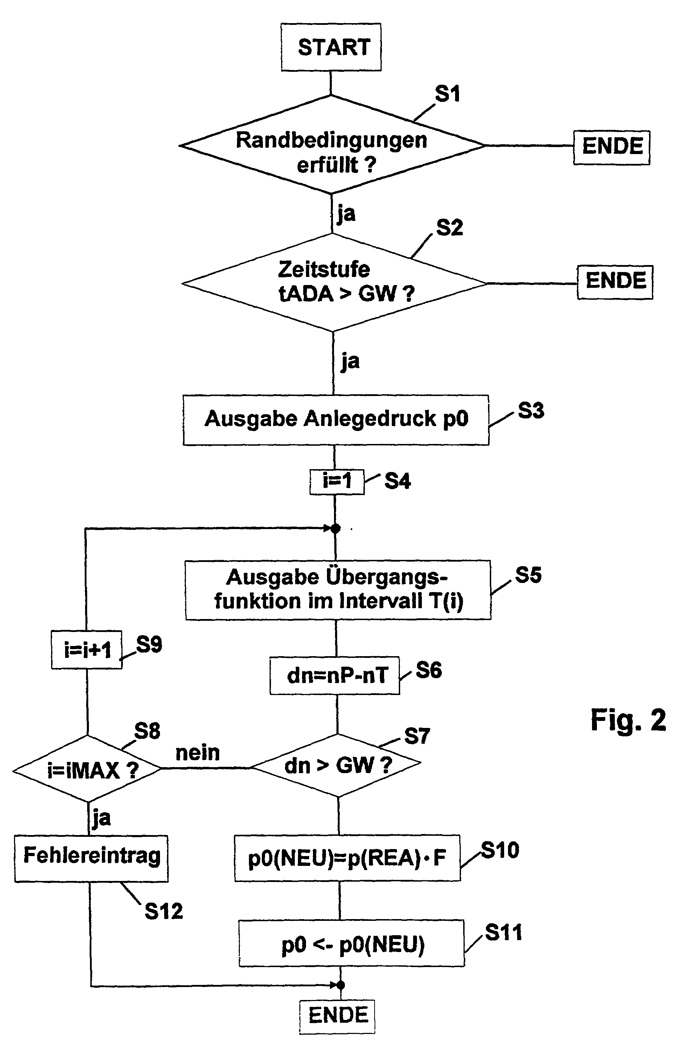

In Fig. 2 ist ein Programm-Ablaufplan für das Adaptionsverfahren der Wandlerüberbrückungskupplung dargestellt. Dies beginnt beim Schritt S1 mit der Abfrage, ob die Randbedingungen erfüllt sind. Diese sind dann erfüllt, wenn:
- die Getriebeöltemperatur Theta(ATF) größer einem Grenzwert ist und
- Schubbetrieb erkannt wurde und
- die Drehzahl der Antriebseinheit nMOT größer einem Grenzwert ist.

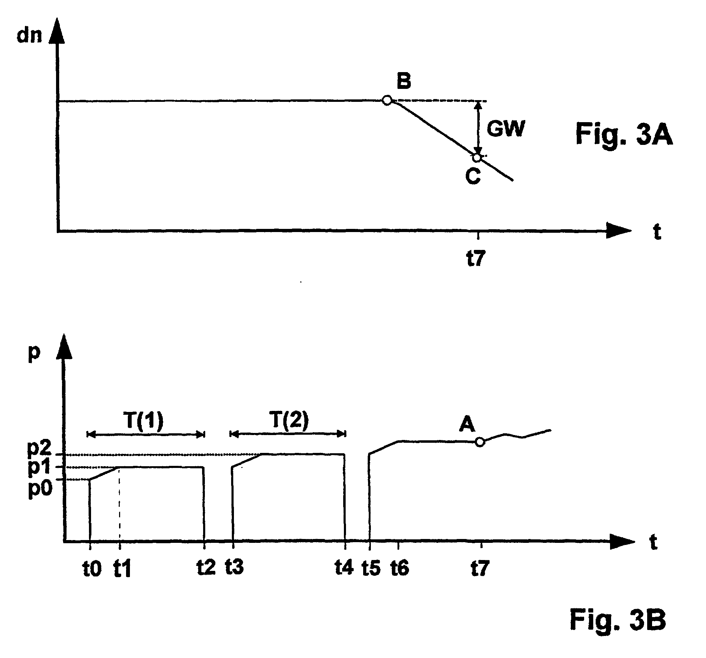

Sind die Randbedingungen nicht erfüllt, so ist das Programm beendet. Bei positiver Abfrage wird im Schritt S2 sodann geprüft, ob eine Zeitstufe tADA größer einem Grenzwert ist. Diese Zeitstufe tADA wird gestartet, nachdem ein erster Adaptionswert ermittelt wurde. Durch diese Zeitstufe wird bewirkt, daß eine erneute Adaption erst nach Ablauf dieser Zeitstufe, z. B. 40 h, durchgeführt wird. Hierdurch wird dem Umstand Rechnung getragen, daß eine Veränderung der Wandlerüberbrückungskupplung nur sehr langsam erfolgt. Bei negativer Abfrage, d. h. die Zeitstufe tAdA ist noch nicht abgelaufen, ist das Programm beendet. Bei positivem Abfrageergebnis im Schritt S2 wird im Schritt S3 ein Anlegedruck p0 ausgegeben. Bei Schritt S4 wird eine Zählvariable i vorgegeben. Im Schritt S5 gibt die elektronische Getriebesteuerung 13 sodann im Intervall T(i) eine Übergangsfunktion aus. Diese Übergangsfunktion ist in Fig. 3B dargestellt. Danach folgt bei Schritt S6 eine Berechnung der Drehzahldifferenz dn aus der Pumpendrehzahl nP minus der Turbinendrehzahl nT. Bei Schritt S7 wird geprüft, ob diese Drehzahldifferenz größer einem Grenzwert ist. Ist dies nicht der Fall, d. h. es ist noch keine Reaktion der Wandlerüberbrückungskupplung meßbar, wird im Schritt S8 abgefragt, ob die Zählvariable i einen Maximalwert iMAX erreicht hat. Dies ist dann der Fall, wenn die elektronische Getriebesteuerung eine vorgegebene Anzahl von Intervallen T(i) ausgegeben hat, ohne daß hierbei eine Reaktion der Wandlerüberbrückungskupplung erkennbar wurde. In diesem Fall erfolgt im Schritt S12 ein Fehlereintrag in der Diagnose und die Aktivierung eines Ersatzprogramms. Dieses bewirkt, daß vorgegebene Zustandsänderungen der Wandlerüberbrückungskupplung, z. B. der geregelte Betrieb, nicht mehr zugelassen werden. Danach ist der Programmablauf beendet.

Hat die Zählvariable i den Maximalwert noch nicht erreicht, so wird bei Schritt S9 diese um Eins erhöht und die Schleife wird mit Schritt S5 mit der erneuten Ausgabe der Übergangsfunktion im Intervall T(i + 1) fortgesetzt. Wird im Schritt S7 festgestellt, daß eine Reaktion der Wandlerüberbrückungskupplung vorliegt, d. h. die Drehzahldifferenz dn ist größer als der Grenzwert GW, so wird bei Schritt S10 der neue Anlegedruck p0(NEU) berechnet, indem das Druckniveau, bei dem die Reaktion der Wandlerüberbrükkungskupplung auftrat, p(REA) mit einem Faktor gewichtet wird. In der Praxis kann selbstverständlich anstatt des Drucks p(REA) auch der von der elektronischen Getriebesteuerung an das elektromagnetische Stellglied ausgegebene Stromwert verwendet werden. Danach wird im Schritt S11 der neue Anlegedruck p0(NEU) als der aktuelle Anlegedruck gespeichert. Danach ist der Programm-Ablaufplan beendet.

Die Fig. 3 besteht aus den beiden Teil-Fig. 3A und 3B. Hierbei zeigen jeweils über der Zeit:
- Fig. 3A: den Verlauf der Drehzahldifferenz dn, berechnet aus Pumpendrehzahl nP minus der Turbinendrehzahl nT und
- Fig. 3B: die von der elektronischen Getriebesteuerung während mehrerer Intervalle T(i) ausgegebene Übergangsfunktion für das Druckniveau der Wandlerüberbrückungskupplung.

Zum Zeitpunkt t0 wird ein erstes Intervall T(1) gestartet. Dieses dauert bis zum Zeitpunkt t2. Für den Zeitraum t0 bis t1 wird das Druckniveau vom Anfangswert p0 linear bis auf den Wert p1 erhöht. Für den Zeitraum t1 bis t2 bleibt das Druckniveau konstant. Die Übergangsfunktion entspricht somit dem Druckverlauf p0 nach p1 und nach p2. Während dem Zeitraum t2 bis t3 prüft die elektronische Getriebesteuerung, ob eine Drehzahldifferenz dn auftritt. Da dies nicht der Fall ist, wird zum Zeitpunkt t3 das zweite Intervall T(2) begonnen. Dieses dauert bis zum Zeitraum t4. Während des zweiten Intervalls T(2) wird vom Verlauf her dieselbe Übergangsfunktion ausgegeben. Das Druckniveau ist jedoch gegenüber dem ersten Intervall T(1) erhöht, und zwar auf das Druckniveau p2. Die Prüfung zu Ende des zweiten Intervalls T(2), also dem Zeitpunkt t4, ergibt, daß die Drehzahldifferenz dn sich immer noch nicht verändert hat. Somit gibt die elektronische Getriebesteuerung im Zeitpunkt t5 ein drittes Intervall aus. Zum Zeitpunkt t6 beginnt die Drehzahldifferenz dn, sich im Punkt B zu verändern. Zum Zeitpunkt t7 hat die Drehzahldifferenz dn einen Grenzwert GW im Punkt C unterschritten. Dies ist dann der Fall, wenn die Wandlerüberbrückungskupplung anliegt. Danach beginnt im Punkt A die Steuer-/Regelphase für die Wandlerüberbrückungskupplung. Das Druckniveau im Punkt A, dies entspricht p(REA) aus der Fig. 2, wird mit einem Faktor F gewichtet. Für die darauffolgenden Schaltungen der Wandlerüberbrückungskupplung wird somit ein neuer Anlegedruck p0 gemäß p0 = p(REA) x F ausgegeben.

### Bezugszeichen

- 1: Antriebseinheit
- 2: Antriebswelle
- 3: hydrodynamischer Wandler
- 4: Pumpenrad
- 5: Turbinenrad
- 6: Leitrad
- 7: Wandlerüberbrückungskupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: Turbinendrehzahl-Signal
- 19: Getriebeausgangsdrehzahl-Signal
- 20: Eingangsgrößen
- 21: hydraulisches Steuergerät
- 22: elektronische Motorsteuerung
- 23: Datenleitung

## Patentansprüche

1. Verfahren zur Adaption einer Wandlerüberbrückungskupplung (7) eines Automatgetriebes, bei der eine elektronische Getriebesteuerung (13) mit Erkennen der Anforderung einer Zustandsänderung der Wandlerüberbrückungskupplung einen Anlegedruck (p0) ausgibt, während einer Steuer-/ Regelphase eine Zustandsänderung der Wandlerüberbrückungskupplung (7) eintritt und die elektronische Getriebesteuerung (13) mittels rückgemeldeter Größen eine Reaktion der Wandlerüberbrückungskupplung (7) erkennt und hieraus einen Adaptionswert für den Anlegedruck (p0) bestimmt, **dadurch gekennzeichnet, daß** nach Ausgabe des Anlegedrucks (p0) eine Anlegephase für die Wandlerüberbrükkungskupplung (7) folgt, während der Anlegephase die elektronische Getriebesteuerung (13) innerhalb eines ersten Intervalls (T(1)) eine Druckänderung nach einer Übergangsfunktion ausgibt und das Vorhandensein der Reaktion der Wandlerüberbrückungskupplung (7) prüft, bei nicht vorhandener Reaktion weitere Intervalle (T(i), i = 2, 3, ..., n) ausgibt, wobei die elektronische Getriebesteuerung (13) innerhalb dieser weiteren Intervalle (T(i), i = 2, 3, ..., n) eine Druckänderung auf Basis des Druckes am Ende des vorigen Intervalls (T(i-1), i = 2, 3, ..., n) nach derselben Übergangsfunktion ausgibt, und die Anlegephase beendet ist, wenn eine Reaktion der Wandlerkupplung (7) eintritt, wobei die elektronische Getriebesteuerung (13) danach mit der Steuer-/Regelphase fortfährt.

2. Verfahren nach Anspruch 1, **dadurch gekennzeichnet, daß** das Eintreten der Reaktion der Wandlerüberbrückungskupplung (7) erkannt wird, wenn eine Drehzahldifferenz (dn), berechnet aus der Pumpen- (nP) und Turbinendrehzahl (nT), einen Grenzwert (GW) unterschreitet (dn < GW).

3. Verfahren nach Anspruch 2, **dadurch gekennzeichnet, daß** der neue Anlegedruck (p0(NEU)) berechnet wird, indem derjenige Druckwert (p(REA)), der bei Auftreten der Reaktion der Wandlerüberbrückungskupplung (7) vorliegt, mit einem Faktor (F) gewichtet wird (p0(NEU) = F . p(REA)).

4. Verfahren nach Anspruch 3, **dadurch gekennzeichnet, daß** die während der Anlegephase ausgegebenen Intervalle summiert werden (SUM(T(i))) und ein Fehlereintrag in ein Diagnosesystem (17) erfolgt, wenn die Summe (SUM(T(i))) einen Grenzwert überschreitet (SUM(T(i))) > GW).

5. Verfahren nach Anspruch 4, **dadurch gekennzeichnet, daß** mit Fehlereintrag ein Ersatzprogramm aktiviert wird, mittels dem vorgegebene Zustandsänderungen der Wandlerüberbrückungskupplung (7) nicht mehr zugelassen sind.

6. Verfahren nach einem der vorausgegangenen Ansprüche, **dadurch gekennzeichnet, daß** mit Beginn des Verfahrens zur Adaption der Wandlerüberbrückungskupplung eine Zeitstufe (tADA) gestartet wird und ein erneutes Verfahren zur Adaption nur dann durchgeführt wird, wenn die Zeitstufe (tADA) einen Grenzwert (GW) überschreitet.

7. Verfahren nach Anspruch 4, **dadurch gekennzeichnet, daß** das Verfahren zur Adaption nur dann durchgeführt wird, wenn folgende weiteren Bedingungen erfüllt sind:
- die Getriebeöltemperatur (Theta(ATF)) ist größer einem Grenzwert (Theta(ATF) > GW) und
- Schubbetrieb erkannt und
- Drehzahl der Brennkraftmaschine (nMOT) größer einem Grenzwert (nMOT > GW).

## Claims

1. Method of adapting a torque converter lock-up clutch (7) of an automatic gearbox in which, when the requirement for a state change of the torque converter lock-up clutch is detected, an electronic gearbox control (13) emits an application pressure (p0), during an open-loop/closed-loop control phase a state change of the torque converter lock-up clutch (7) occurs and the electronic gearbox control (13) detects by means of fed-back quantities a response of the torque converter lock-up clutch (7) and determines therefrom an adaptation value for the application pressure (p0), **characterized in that**, after emission of the application pressure (p0), an application phase follows for the torque converter lock-up clutch (7), during the application phase the electronic gearbox control (13) emits, within a first interval (T(1)), a pressure change after a transition function and tests for the existence of the response of the torque converter lock-up clutch (7) and if a response is not present, emits further intervals (T(i), i = 2, 3, ..., n), wherein the electronic gearbox control (13) emits, within said further intervals (T(i), i = 2, 3, ..., n), a pressure change based on the pressure at the end of the previous interval (T(i-1), i = 2, 3, ..., n) after the same transition function, and the application phase is terminated if a response of the lock-up clutch (7) occurs, wherein the electronic gearbox control (13) then continues the open-loop/closed-loop control phase.

2. Method according to Claim 1, **characterized in that** the occurrence of the response of the torque converter lock-up clutch (7) is detected if a rotational speed difference (dn), calculated from the pump rotational speed (nP) and the turbine rotational speed (nT), drops below a limit value (LV) (dn < LV).

3. Method according to Claim 2, **characterized in that** the new application pressure (p0(NEW)) is calculated **in that** that pressure value (p(REA)) that exists during the occurrence of the response of the torque converter lock-up clutch (7) is weighted with a factor (F) (p0(NEW) = F . p(REA)).

4. Method according to Claim 3, **characterized in that** the intervals emitted during the application phase are summed (SUM(T(i))) and an error entry is made in a diagnostic system (17) if the sum (SUM(T(i))) exceeds a limit value (SUM(T(i))) > LV).

5. Method according to Claim 4, **characterized in that** the error entry activates a substitute program by means of which the selected state change of the torque converter lock-up clutch (7) is no longer permitted.

6. Method according to one of the preceding claims, **characterized in that**, at the beginning of the method of adapting the torque converter lock-up clutch, a time step (tADA) is started and a repeat method of adapting is carried out only if the time step (tADA) exceeds a limit value (LV).

7. Method according to Claim 4, **characterized in that** the method of adapting is carried out only if the following further conditions are fulfilled:
- the gearbox oil temperature (Theta(ATF)) is greater than a limit value (Theta(ATF) > LV) and
- a coasting condition is detected and
- the rotational speed of the internal combustion engine (nMOT) is greater than a limit value (nMOT > LV).

## Revendications

1. Procédé pour l'adaptation d'un embrayage de prise directe (7) d'une boîte de vitesses automatique dans lequel, en réponse à la détection de la demande d'une modification d'état de l'embrayage de prise directe, une commande électronique (13) de boîte de vitesses émet une pression d'application (p0), pendant une phase de commande/régulation, il se produit une modification d'état de l'embrayage de prise directe (7) et la commande électronique (13) de la boîte de vitesses détecte, au moyen de grandeurs envoyées en retour, une réaction de l'embrayage de prise directe (7) et, sur cette base, détermine une valeur d'adaptation pour la pression d'application (p0), **caractérisé en ce que**, pour l'embrayage de prise directe (7), une phase d'application fait suite à l'émission de la pression (p0), pendant la phase d'application, la commande électronique (13) de la boîte de vitesses émet, dans un premier intervalle (T(1)), une modification de pression d'après une fonction de transition et vérifie la présence de la réaction de l'embrayage de prise directe (7) et, en l'absence de réaction, émet des intervalles additionnels (T(i), i = 2, 3, ..., n), la commande électronique (13) de la boîte de vitesses émettant, dans ces intervalles additionnels (T(i), i = 2, 3, ..., n), une modification de pression sur la base de la pression régnant à la fin de l'intervalle (T(i-1), i = 2, 3 ..., n) précédent, d'après la même fonction de transition, et la phase d'application étant terminée lorsqu'il se produit une réaction de l'embrayage du convertisseur (7), la commande électronique (13) de la boîte de vitesses continuant ensuite avec la phase de commande/régulation.

2. Procédé selon la revendication 1, **caractérisé en ce que** la production de la réaction de l'embrayage de prise directe (7) est détectée lorsqu'une différence de vitesse de rotation (dn), calculée à partir de la vitesse de rotation de la pompe (nP) et de la vitesse de rotation de la turbine (nT), devient inférieure à une valeur limite (GW), (dn < GW).

3. Procédé selon la revendication 2, **caractérisé en ce que** la nouvelle pression d'application (p0(NEU)) est calculée par le fait que la valeur de pression (p (REA)), qui est présente lors de la production de la réaction de l'embrayage de prise directe (7), est pondérée avec un facteur (F), (p0 (NEU)) = F. p (REA)).

4. Procédé selon la revendication 3, **caractérisé en ce que** les intervalles émis pendant la phase d'application sont additionnés (SUM (T (i))) et il se produit une inscription d'erreur dans un système de diagnostic (17) lorsque la somme (SUM (T (i))) devient supérieure à une valeur limite (SUM (T (i))) > GW).

5. Procédé selon la revendication 4, **caractérisé en ce que**, en réponse à l'inscription de l'erreur, un programme de remplacement est activé, programme au moyen duquel des modifications d'état prédéterminées de l'embrayage de prise directe (7) ne sont plus autorisées.

6. Procédé selon l'une des revendications précédentes, **caractérisé en ce qu'**une étape de temps (tADA) est démarrée en réponse au début du procédé pour l'adaptation de l'embrayage de prise directe, et un nouveau procédé pour l'adaptation n'est exécuté que lorsque l'étape de temps (tADA) devient supérieure à une valeur limite (GW).

7. Procédé selon la revendication 4, **caractérisé en ce que** le procédé pour l'adaptation n'est exécuté que lorsque les autres conditions suivantes sont remplies :
- la température de l'huile de la boîte de vitesses (Theta (ATF)) est supérieure à une valeur limite (Theta (ATF) > GW),
- un fonctionnement en poussée est détecté et
- la vitesse de rotation du moteur à combustion interne (nMOT) est supérieure à une valeur limite (nMOT > GW).
